# EUROPEAN PATENT APPLICATION

(11) **EP 3 316 369 A1**
(43) Date of publication of application: **02.05.2018**
(21) Application number: 16818121.2
(22) Date of filing: 12.05.2016
(51) Int. Cl.: H01M 8/04, H01M 8/06, H01M 8/12

(54) **SOLID OXIDE FUEL CELL SYSTEM WITH IMPROVED THERMAL EFFICIENCY, AND SOLID OXIDE FUEL CELL SYSTEM HEATED BY HIGH-TEMPERATURE GAS**

(30) Priority: 29.06.2015 KR 20150092180; 29.06.2015 KR 20150092181
(71) Applicant: Kyungdong Navien Co., Ltd., Pyeongtaek-si (KR)
(72) Inventor: SHIN, Seockjae, Seoul 03031 (KR); PARK, Se Jin, Seoul 08799 (KR); YI, Yong, Seoul 07413 (KR); KIM, Jinhyeong, Seoul 08521 (KR); SON, Seungkil, Bucheon-si Gyeonggi-do 14540 (KR)
(74) Representative: Krauns, Christian
(86) International application number: PCT/KR2016/005012
(87) International publication number: WO 2017/003088

(57) **Abstract**

Disclosed is a solid oxide fuel cell system with enhanced thermal efficiency. Accordingly, provided is a solid oxide fuel cell system with enhanced thermal efficiency, which is capable of heating and using fuel, air, or water supplied to a hot box at a room temperature by a heat exchanger in the hot box and minimizing heat discharged to the outside of the hot box.

## Description

### [Technical Field]

A first exemplary embodiment of the present invention relates to a solid oxide fuel cell system with enhanced thermal efficiency and a second exemplary embodiment of the present invention relates to a solid oxide fuel cell system heated by high-temperature gas.

### [Background Art]

Electric energy that we currently use is mainly obtained by thermal power generation and nuclear power generation, and besides, a small amount of electric energy is obtained by hydraulic power and other power generation.

Since the thermal power generation burns fossil fuels such as coal, a large amount of carbon dioxide is inevitably generated by the thermal power generation, and other pollutants such as carbon monoxide, sulfur oxides, or nitrogen oxides are discharged to the atmosphere.

In addition, in the case of the nuclear power generation, radioactive waste generated after the use of nuclear energy needs to be safely stored or treated, and therefore, cost and labor need to be increased. Therefore, the nuclear power generation is not significantly different from the thermal power generation in terms of environmental pollution.

In such a situation, environmental protection through development of CO2 saving and energy efficiency enhancement technology using various renewable energy is being promoted nationwide in order to solve problems such as the environmental pollution or global warming.

In particular, a mandatory renewable energy system (RPS) which has been enforced since 2012 is a system that is mandatory to provide more than a certain amount of total power generation as renewable energy power to a power generation provider of a predetermined size and activation of spread of the RPS is promoted by giving a high weight to a fuel cell power generation system.

A fuel cell is a device that converts chemical energy of fuel into electrical energy. Generally, the fuel cell refers to a power generation system that products electricity by electrochemically reacting hydrogen in reforming gas obtained by reforming fuel such as natural gas, methanol, gasoline, or the like and oxygen in the air with an anode of a stack in a cathode.

In this case, a reaction equation and a total reaction equation in each of the anode and the cathode are as follows.
Anode: 2H₂ + 2O²⁻ → 2H₂O + 4e⁻
Cathode: O₂ + 4e⁻ → 2O²⁻
Total reaction equation: 2H₂ + O₂ → 2H₂O

That is, ultimately, the fuel cell uses the hydrogen as the fuel and there is no other by-product other than water, which is advantageous in that it is very environmentally friendly.

In addition, the fuel cell has an advantage of being a highly efficient power generation method because the electric energy can be obtained from the chemical energy by a relatively simple energy conversion process.

The fuel cell includes polymer electrolyte fuel cells (PEMFC), direct methanol fuel cells (DMFC), phosphoric acid fuel cells (PAFC), molten carbonate fuel cells (MCFC), solid oxide fuel cells (SOFC), alkaline fuel cells (AFC), and the like. In recent years, a reformer portion can be relatively simplified, there is no problem of poisoning with carbon monoxide and various fuels can be thus used. A solid oxide fuel cell is attracting attention, which is lower than another fuel cell in terms of dependency on an expensive catalyst because the solid oxide fuel cell is operated at a high temperature.

Meanwhile, the solid oxide fuel cell is operated at a very high temperature as described above and in particular, a hot box of the solid oxide fuel cell needs to be heated to the very high temperature for power generation.

Therefore, in the related art, in order to maintain a temperature required for operation, energy remaining in a burner has been used for reforming or steam generation. In the solid oxide fuel cell system, there is a problem in that in addition to a heat source for increasing and maintaining the temperature of the hot box, which operates at the high temperature, efficiency of the system cannot be increased by separately installing a heat source for preheating fuel, air or water (water vapor) supplied to the fuel cell.

Further, in the related art, a method of heating the entirety of an inner part of the hot box to raise the temperature of the hot box to an operating temperature of the system or to maintain the operating temperature has been generally used. When the entirety of the inner part of the hot box is heated, not only a lot of heat is required but also a temperature rising speed of the hot box is low during heating, resulting in a problem that the efficiency of the entire system is deteriorated.

### [DISCLOSURE]

### [Technical Problem]

A first exemplary embodiment of the present invention has been made in an effort to provide a solid oxide fuel cell system with enhanced thermal efficiency, which can heat and use fuel, air, or water supplied to a hot box at a room temperature by a heat exchanger in the hot box and minimize heat discharged to the outside of the hot box. A second exemplary embodiment of the present invention has been made in an effort to provide a solid oxide fuel cell system heated by high-temperature gas in which a heating volume of the hot box is reduced and thermal efficiency of a system is increased by not the entirety of an inner part of the hot box of the solid oxide fuel cell system but components in the hot box by the high-temperature gas.

### [Technical Solution]

An exemplary embodiment of the present invention provides a solid oxide fuel cell system with enhanced thermal efficiency, including: a hot box; a heat exchange and a stack in the hot box; and a heat source supplying heat to the heat exchanger, in which fuel and air supplied to the hot box at a room temperature is heated and operated through the heat exchanger.

Water supplied to the hot box at the room temperature may be heated and operated through the heat exchanger.

The heat exchanger may include a heat exchange type reformer heating and reforming the fuel supplied to the hot box and supplying the heated and reformed fuel to the stack, and an air preheater heating air supplied to the hot box and supplying the heated air to the stack, and heat of the heat source may be sequentially supplied to the heat exchange type reformer and the air preheater.

The heat exchanger may further include an anode discharge gas cooler transferring the heat of a discharge gas discharged from an anode of the stack to the air supplied to the hot box.

The air supplied to the hot box at the room temperature may be sequentially heated through the anode discharge gas cooler and the air preheater.

The heat source may be a burner that is disposed in the hot box to generate high-temperature combustion gas.

The burner may generate the combustion gas by receiving combustion fuel and combustion air in addition to the discharge gas in the stack.

The heat source may further include an electric heater disposed outside the hot box and supplying high-temperature air to the burner.

Another exemplary embodiment of the present invention provides a solid oxide fuel cell system heated by high-temperature gas, including: a hot box; a component part constituted by components disposed in the hot box; a high-temperature part constituted by components requiring a high temperature for power generation among the components; a space part which is a space other than a space occupied by the component part of an internal space of the hot box; and a heat source supplying high-temperature gas to the component part including the high-temperature part, in which the high-temperature gas heats the high-temperature part through the component part, and a temperature rises up to an operating temperature by the heating or is maintained to the operating temperature.

The heat source may be a burner disposed in the hot box and the high-temperature gas may be combustion gas of the burner.

The heat source may be an electric heater disposed outside the hot box, and the high-temperature gas may be high-temperature air by the electric heater.

A heat insulating material may be disposed in the space part, and heat may be insulated between the component part and the hot box by the heat insulating material.

The heat insulating material may be a heat insulating material processed to correspond to the shape of the component part or a powder type heat insulating material.

The high-temperature part may include a heat exchange type reformer and the heat exchange type reformer may be heated by the high-temperature gas.

The high-temperature part may include a stack, fuel or steam supplied to the stack may be heated by heat exchange with the high-temperature gas in the component part, and the stack may be heated by the heat-exchanged fuel or steam.

The component part may include the heat exchange type reformer, the high-temperature gas may be supplied to the heat exchange type reformer, and the fuel or steam may be heated by the heat exchange type reformer.

The high-temperature part may include the stack, air supplied to the stack may be heated by heat exchange with the high-temperature gas in the component part, and the stack may be heated by the heat-exchanged air. The component part may include an air preheater.

The component part may further include an anode discharge gas cooler of the stack, and the air is sequentially heated through the anode discharge gas cooler and the air preheater.

### [Advantageous Effects]

According to a first exemplary embodiment of the present invention, fuel, air, or water supplied to a hot box at a room temperature can be heated and used by a heat exchanger in the hot box and heat discharged to the outside of the hot box can be minimized. According to a second exemplary embodiment of the present invention, a heating volume of the hot box can be reduced and thermal efficiency of a system can be increased by heating not the entirety of an inner part of the hot box of the solid oxide fuel cell system but components in the hot box.

### [Description of the Drawings]

FIG. 1 is a conceptual diagram of a solid oxide fuel cell system with enhanced thermal efficiency according to a first exemplary embodiment of the present invention.
FIG. 2 is a diagram illustrating a heat transfer state in a hot box of the solid oxide fuel cell system with enhanced thermal efficiency according to the first exemplary embodiment of the present invention.
FIG. 3 is a conceptual diagram of a solid oxide fuel cell system heated by high-temperature gas according to an exemplary embodiment of the present invention.
FIG. 4 is a diagram illustrating a heat transfer state in a hot box of the solid oxide fuel cell system heated by high-temperature gas according to the exemplary embodiment of the present invention.

### [Mode for Invention]

In order to facilitate understanding of the features of the present invention, the first and second exemplary embodiments of the present invention will be described in detail with reference to the accompanying drawings.

Hereinafter, the exemplary embodiments will be described based on exemplary embodiments best suited for understanding the technical characteristics of the present invention, and the technical features of the present invention are not limited by the exemplary embodiments, but it is exemplified that that the present invention may be implemented as described in the exemplary embodiments described below. Therefore, it is construed that various modifications can be made within the technical scope of the present invention through the exemplary embodiments described below and the modified exemplary embodiments are included in the technical scope of the present invention. In order to facilitate the understanding of the embodiments described below, in reference numerals illustrated in the accompanying drawings, related components among components that perform the same function in the respective exemplary embodiments are indicated by the same or an extension line number.

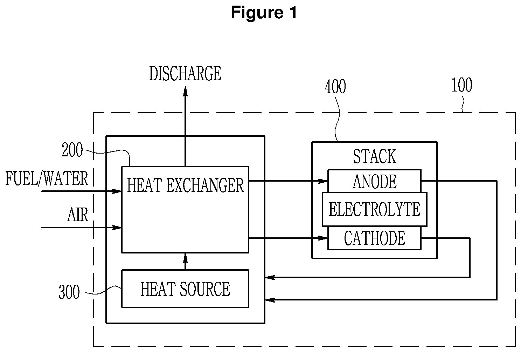

FIG. 1 is a conceptual diagram of a solid oxide fuel cell system with enhanced thermal efficiency according to a first exemplary embodiment of the present invention.

Referring to FIG. 1, the solid oxide fuel cell system with enhanced thermal efficiency according to the first exemplary embodiment of the present invention includes a hot box 100, a heat exchanger 200, a stack 400, and a heat source 300.

The hot box 100 generally provides insulation for maintaining an operating temperature of components operated at a high temperature among the components applied to a fuel cell system and minimizes heat loss to enhance system efficiency.

The heat exchanger 200 and the stack 400 are disposed in the hot box 100.

The stack 400 generates DC power using hydrogen by supplied and air in the atmosphere. The fuel supplied to the stack 400 is transformed to hydrogen by a reformer, but is not illustrated.

Since the solid oxide fuel cell system with enhanced thermal efficiency according to the first exemplary embodiment of the present invention includes a heat exchange type reformer, the reformer may be included in the heat exchanger 200, which will be described later.

The heat exchanger 200 heats the fuel and air supplied from the outside of the hot box 100 at a room temperature to a temperature suitable for being supplied to the stack 400. The fuel and air heated through the heat exchanger 200 are supplied to the stack 400.

Power is generated by the fuel and air supplied to the stack 400 and discharge gas from the stack 400 is supplied to the heat exchanger 200 or the heat source 300. Heat of the discharge gas supplied to the heat exchanger 200 is recovered by the heat exchanger 200 and used to heat the fuel and the air.

The discharge gas supplied to the heat source 300 is used for the heat source to generate high-temperature gas. The high-temperature gas generated from the heat source 300 is supplied to the heat exchanger 200 and the heat of the high-temperature gas is used to heat the fuel and air supplied to the hot box 100 at the room temperature. The high-temperature gas is discharged to the outside of the hot box 100 after the heat is recovered by the heat exchanger 200.

Through such a process, the fuel and air supplied into the hot box 100 at the room temperature are heated at a temperature suitable for being supplied to the stack 400.

The fuel supplied into the hot box 100 may contain water and the water is also be heated through the heat exchanger 200 to be heated at a temperature suitable for being supplied to the stack 400. The water at the room temperature is supplied into the hot box 100 and is heated to be present in a state of steam in the hot box 100.

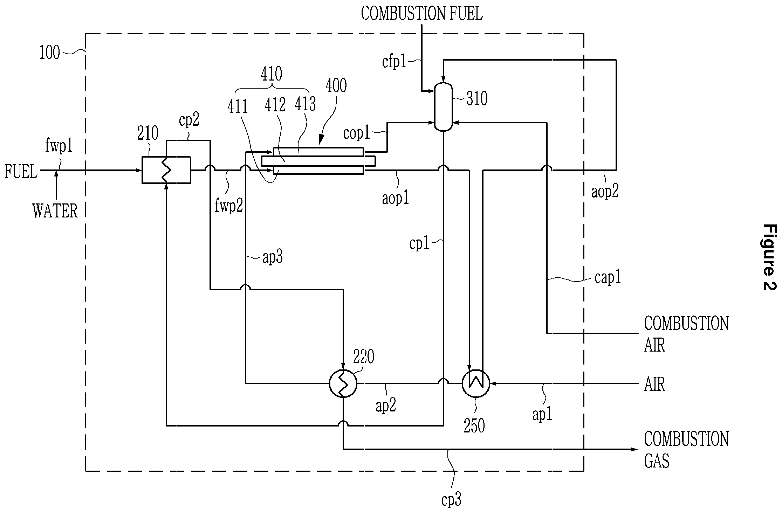

FIG. 2 is a diagram illustrating a heat transfer state in a hot box of the solid oxide fuel cell system with enhanced thermal efficiency according to the first exemplary embodiment of the present invention.

The heat exchanger 200 according to the first exemplary embodiment of the present invention may include a heat exchange type reformer 210 or an air preheater 220. The heat exchange type reformer 210 heats and reforms the fuel supplied to the hot box 100 and supplies the heated and reformed fuel to the stack 400 and the fuel may include the water. The air preheater 220 heats the air supplied to the hot box 100 and supplies the heated air to the stack 400.

As described above, the fuel, the air, or the water at the room temperature is supplied to the hot box 100 and the water is heated to be present in the state of the steam in the hot box 100.

Meanwhile, in the present specification, the 'room temperature' as a temperature outside the solid oxide fuel cell system with enhanced thermal efficiency which is the present invention is defined as a temperature which is not subjected to any treatment with regard to a temperature such as heating or cooling.

The heat source 300 according to the first exemplary embodiment of the present invention may be a burner 310 and the burner 310 may be disposed in the hot box 100. The burner 310 receives the discharge gas from the stack 400 and generates high-temperature combustion gas. The combustion gas may be first supplied to the heat exchange type reformer 210 along a first combustion gas pipe cp1.

The combustion gas supplied to the heat exchange type reformer 210 is in a state of a highest temperature in the hot box 100. The combustion gas supplied to the heat exchange type reformer 210 exchanges the heat with the fuel or the water supplied to the stack 400. By the heat exchange in the heat exchange type reformer 210, the fuel or water is heated and the temperature of the combustion gas becomes lower. The combustion gas heat-exchanged in the heat exchange type reformer 210 may be supplied to the air preheater 220 along a second combustion gas pipe cp2.

The combustion gas supplied to the air preheater 220 exchanges the heat with the air supplied to the stack 400. By the heat exchange in the air preheater 220, the air is heated and the temperature of the combustion gas becomes lower. The combustion gas heat-exchanged in the air preheater 220 may be discharged to the outside of the hot box 100 along a third combustion gas pipe cp3.

For example, the combustion gas of the burner 310 according to the first exemplary embodiment of the present invention may be sequentially supplied to the heat exchange type reformer 210 and the air preheater 220.

By the supply of the combustion gas, the heat is transferred to fuel, air, or water and ultimately, the heat is transferred to the heat exchange type reformer 210 or the stack 400. The heat transfer enables the reforming in the heat exchange type reformer 210 or the power generation in the stack 400. The temperature of the combustion gas is gradually lowered through the heat exchange type reformer 210 and the air preheater 220.

Meanwhile, the fuel used for the power generation in the stack 400 is supplied into the hot box 100 at the room temperature. The fuel may be a variety of hydrogen or hydrocarbon based fuels, such as natural gas (NG), liquefied natural gas (LNG), liquefied petroleum gas (LPG) or diesel. The fuel supplied into the hot box 100 may contain the water by a separate supply device (not illustrated).

The fuel supplied into the hot box 100 may be supplied to the heat exchange type reformer 210 along a first fuel/water pipe fwp1.

The fuel supplied to the heat exchange type reformer 210 is heated by heat exchange with the combustion gas of the burner 310 in the heat exchange type reformer 210. In this case, the water included in the fuel is phase-changed to the steam. In addition, the heat exchange type reformer 210 reforms the heated fuel to generate hydrogen gas. The hydrogen gas may be supplied to an anode 411 of the stack 400 along a second fuel/water pipe fwp2.

The stack 400 is generally constituted by multiple single cells in series or in parallel and the single cell is constituted by a porous anode 411 and a cathode 413, and an electrolyte 412 having a dense structure, which is disposed therebetween.

Hydrogen H₂ contained in the hydrogen gas supplied to the anode 411 of the stack 400 reacts with oxygen ions O²⁻ conducted through the electrolyte 412 which is an ion conductor from the cathode 413. Hydrogen H₂ contained in the hydrogen gas supplied to the anode 411 of the stack 400 reacts with oxygen ions O²⁻ conducted through the electrolyte 412 which is an ion conductor from the cathode 413

The gas discharged from the anode 411 after the reaction, that is, anode discharge gas is supplied to the burner 310 along first and second anode discharge gas pipes aop1 and aop2 to be used as the fuel for combustion of the burner 310.

Meanwhile, as described above, since the reaction is an exothermic reaction that releases the heat, the anode discharge gas is discharged at a somewhat higher temperature than the hydrogen gas supplied to the anode 411.

Further, since the reaction is a reaction for discharging the water (H₂O), a large amount of steam is included in the anode discharge gas. Due to the large amount of steam, the anode discharge gas may not be suitable for being used as the fuel of the burner 310. The reason is that a temperature increment by the combustion of the burner 310 may be limited due to the steam and in particular, when the burner 310 is a catalytic burner, the steam may seriously damage a catalyst. Therefore, it is preferable to use the anode discharge gas as the fuel for the combustion of the burner 310 after removing the steam. The steam may be removed by various methods, but it is preferable that the steam is condensed and removed by lowering the temperature of the anode discharge gas in terms of utilization of the heat by the recovery of the heat.

As described above, the heat exchanger 300 according to the first exemplary embodiment of the present invention may further include an anode discharge gas cooler 250 that transfers the heat of the anode discharge gas to the air supplied to the hot box 100 in order to recover and use the heat of the anode discharge gas and lower the temperature of the anode discharge gas.

When the heat exchanger 300 further includes the anode discharge gas cooler 250, the anode discharge gas may be supplied to the anode discharge gas cooler 250 along the first anode discharge gas pipe aop1. Since the air supplied to the hot box 100 is at the room temperature, the temperature of the anode discharge gas supplied to the anode discharge gas cooler 250 may be lowered by heat exchange with the air.

The anode discharge gas supplied to the anode discharge gas cooler 250 may pass through a heat exchanger (not illustrated) disposed outside the hot box 100 while moving to the burner 310 along the second anode discharge gas pipe aop2.

The anode discharge gas may be further cooled by the heat exchanger (not illustrated) disposed outside the hot box 100 and the heat of the anode discharge gas recovered by the heat exchanger (not illustrated) may be used for heating or hot water supply.

A condenser (not illustrated) may be disposed in the second anode discharge gas pipe aop2 passing through the outside of the hot box 100 and the water condensed by the temperature lowering may be separated and discharged from the condenser (not illustrated). Accordingly, a large amount of steam contained in the anode discharge gas may be removed and the anode discharge gas may be used more effectively as the fuel for the combustion of the burner 310.

Meanwhile, the air used for the power generation in the stack 400 is supplied into the hot box 100 at the room temperature. The air supplied into the hot box 100 is supplied to the cathode 413 of the stack 400 along air pipes ap1, ap2, and ap3.

Oxygen contained in the air supplied to the cathode 413 is reduced to the oxygen ions O²⁻ by the electrochemical reaction between the cathode 413 and the anode 411 and the oxygen ions O²⁻ and is conducted to the anode 411 through the electrolyte 412. The air supplied to the cathode 413 needs to be heated to a predetermined temperature. As described above, the air may be heated through the air preheater 220. That is, the air may be heated by heat exchange with the combustion gas of the burner 310 in the air preheater 220.

For more efficient heat management, the heat exchanger 200 according to the first exemplary embodiment of the present invention may further include the anode discharge gas cooler 250 as described above. When the heat exchanger 200 further includes the anode discharge gas cooler 250, the air may be heated more efficiently by heat exchange with the anode discharge gas in the anode discharge gas cooler 250. In this case, heating in the anode discharge gas cooler 250 may be auxiliary to heating in the air preheater 220.

Experimentally, the temperature of the combustion gas in the air preheater 220 is measured to be higher than the temperature of the anode discharge gas in the anode discharge gas cooler 250. Accordingly, the air may preferably pass through the anode discharge gas cooler 250 and the air preheater 220 in sequence.

Hereinafter, the first exemplary embodiment of the present invention relating to the supply of the air will be described with reference to FIG. 2.

The air supplied to the HOT box 100 at the room temperature may be supplied to the anode discharge gas cooler 250 along the first air pipe ap1. The air supplied to the anode discharge gas cooler 250 may be primarily heated by heat exchange with the anode discharge gas in the anode discharge gas cooler 250. The primarily heated air may be supplied to the air preheater 220 along the second air pipe ap2.

The air supplied to the air preheater 220 may be secondarily heated by heat exchange with the combustion gas in the air preheater 220. The secondarily heated air may be supplied to the cathode 413 of the stack 400 along the third air pipe ap3.

The air supplied to the cathode 413 is used for the power generation in the stack 400 and cathode discharge gas discharged from the cathode 413 is supplied to the burner 310 along a cathode discharge gas pipe cop1 to be used for the combustion of the burner.

Meanwhile, the burner 310 according to the first exemplary embodiment of the present invention is provided from separate combustion fuel and combustion air other than the discharge gas from the anode 411 and the cathode 413 of the stack 400, that is, the discharge gas in the stack 400 to generate the combustion gas.

The temperature outside the solid oxide fuel cell system with enhanced thermal efficiency according to the present invention varies depending on the season, the day, the night, or the region and the temperature of the fuel, air, or water at the room temperature supplied to the hot box 100 may vary depending on the outside temperature. In particular, when the outside temperature is extremely low, the solid oxide fuel cell system with enhanced thermal efficiency according to the present invention may require more combustion gas by the burner 310 or require combustion gas of higher temperature.

According to the above-described need, the solid oxide fuel cell system with enhanced thermal efficiency according to the present invention may generate combustion gas of a larger amount or a higher temperature by supplying the combustion fuel and the combustion air.

Referring to FIG. 2, the combustion fuel may be supplied to the burner 310 along a combustion fuel pipe cfp1. Further, the combustion air may be supplied to the burner 310 along a combustion air pipe cap1. The burner 310 may generate combustion gas of a larger amount or a higher temperature by supplying the combustion fuel and the combustion air.

Meanwhile, the heat source 300 according to the first exemplary embodiment of the present invention may further include an electric heater (not illustrated) disposed outside the hot box 100 and supplying high-temperature air to the burner 310. The electric heater (not illustrated) supplies the high-temperature air to the burner 310 to raise the temperature of the burner 310. Thus, the electric heater (not illustrated) may provide the same or similar effect as generation of the combustion gas of a larger amount or a higher temperature by the combustion fuel or the combustion air.

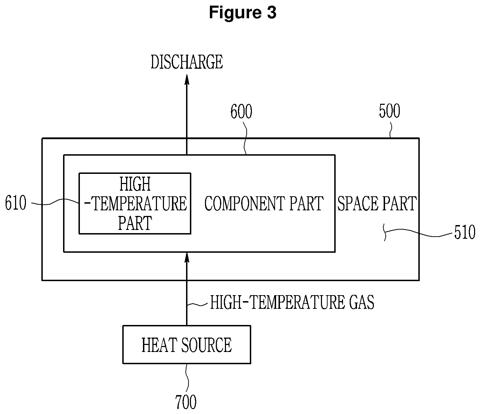

FIG. 3 is a conceptual diagram of a solid oxide fuel cell system heated by high-temperature gas according to a second exemplary embodiment of the present invention.

Referring to FIG. 3, the solid oxide fuel cell system heated by high-temperature gas according to the exemplary embodiment of the present invention includes a hot box 500, a component part 600, a high-temperature part 610, a space part 510, and a heat source 700.

The hot box 500 generally provides insulation for maintaining an operating temperature of components operated at a high temperature among the components applied to a fuel cell system and minimizes heat loss to enhance system efficiency.

The component part 600 is constituted by components disposed in the hot box.

The high-temperature part 610 is constituted by components requiring the high temperature for the power generation among the components of the component part.

The space part 510 means a space other than a space occupied by the component part 600 of an internal space of the hot box 100.

The heat source 700 supplies the high-temperature gas to the component part 600 including the high-temperature part 610. The heat source 700 supplies the high-temperature gas only to the component part 600 including the high-temperature part 610 and the high-temperature gas is not supplied to the space part 510.

By the supply of the high-temperature gas, the high-temperature part 610 requiring the high temperature for the power generation may be heated. In addition, the temperature of the solid oxide fuel cell system heated by the hot gas according to the present invention may rise to the operating temperature by heating or may be maintained at the operating temperature.

The heat source 700 according to the second exemplary embodiment of the present invention may be the burner disposed inside the hot box 500 and the high-temperature gas may be the combustion gas of the burner. Further, the heat source 700 may be the electric heater disposed outside the hot box 500 and the hot gas may be high-temperature air by the electric heater.

According to the solid oxide fuel cell system heated by the high-temperature gas according to the second exemplary embodiment of the present invention, the high-temperature gas is supplied only to the component part 600 and the high-temperature gas is supplied to the component part 600 to directly or indirectly heat only the high-temperature part 610. That is, the high-temperature gas does not directly or indirectly heat the entire interior of the hot box 500 or the space part 510, but directly or indirectly heats only the high-temperature part 610.

The direct heating means that the high-temperature part is heated by direct heat exchange with the high-temperature gas and the indirect heating means that the high-temperature part is heated by a heat medium which exchanges the heat with the high-temperature gas. The heat medium is limited to an intended heat medium and the intended heat medium may be the fuel, the steam, or the air supplied to the stack 220 for the power generation, which will be described later.

A heat insulating material (not illustrated) may be disposed in the space part 510 and the component part 600 and the hot box 500 may be insulated by the heat insulating material (not illustrated). The heat insulating material (not illustrated) may be a heat insulating material that is processed to correspond to the shape of the component part 600. In other words, the heat insulating material (not illustrated) may be processed to a shape that the heat insulating material may come in contact with an outer surface of the component part 600 and an inner surface of the hot box 500 to fill the space part 510. In addition, the heat insulating material (not illustrated) may be a powder type heat insulating material and the space part 510 may be filled with the power type heat insulating material.

In the case of directly or indirectly heating the high-temperature part 610, a heating volume by the high-temperature gas is reduced as compared with the case of heating the entire interior of the hot box 500, so that the thermal efficiency of the fuel cell system may increase.

In the case where the heat insulating material is disposed in the space part 510, temperature control of each part is easy in the case where each part of the component part 600 has an independent temperature distribution for each component and the heat is prevented from being released to the outside of the component part 600, that is, the space part 510 by heat radiation, or the like, and as a result, the thermal efficiency may increase.

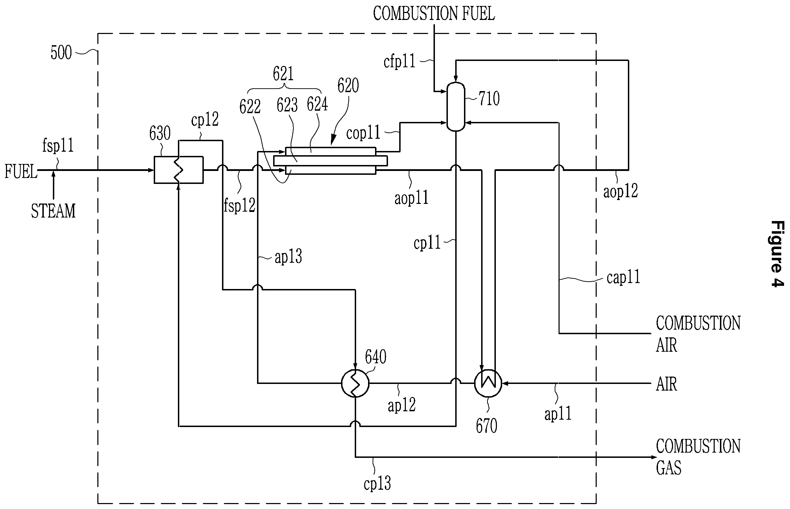

FIG. 4 is a diagram illustrating a heat transfer state in a hot box of the solid oxide fuel cell system heated by high-temperature gas according to the second exemplary embodiment of the present invention.

Referring to FIG. 4, the component part 600 according to the second exemplary embodiment of the present invention may include a stack 620, a heat exchange type reformer 630, or various heat exchangers. In addition, the component part 600 may include various pipes which are passages of gas supplied to the stack 620, the heat exchange reformer 630, or various heat exchangers.

The heat exchangers may include a heat exchanger type reformer 630, an air preheater 640, or an anode discharge gas cooler 670. The pipes may include a combustion gas pipe cp, a fuel/steam pipe fsp, an air pipe ap, an anode discharge gas pipe aop, a cathode discharge gas pipe cop, or a combustion fuel pipe cap.

The high-temperature part 610 according to the second exemplary embodiment of the present invention may include the stack 620 and may include the heat exchange type reformer 630 in the case of reforming the hydrogen to be supplied to the stack 620.

Hereinafter, heating of the heat medium (fuel, air or steam) for heating the heat exchange reformer 630 and heating the stack 620 by the high-temperature gas will be described. The heat medium is used for raising the temperature of the stack 620 until the temperature of the high-temperature part 610 reaches a predetermined operating temperature of the system according to the present invention, but after the temperature of the high-temperature part 610 reaches a predetermined operating temperature, the heat medium is used for maintaining the temperature of the stack 620 and the power generation in the stack 620.

As described above, the heat source 700 according to the present invention supplies the high-temperature gas to the component part 600 including the high-temperature part 610 and the high-temperature gas heats the high-temperature part 610 through the component part 600.

The heat source 700 according to the second exemplary embodiment of the present invention may be a burner 710 or an electric heater (not illustrated), and the burner 710 or the electric heater (not illustrated) may be disposed inside or outside the hot box 500.

When the heat source 700 is the burner 710, the burner 710 may receive discharge gas from the stack 620 or separate combustion fuel and combustion air to generate combustion gas. When the heat source is the electric heater (not illustrated), the electric heater (not illustrated) may generate hot air.

Hereinafter, an exemplary embodiment in which the heat source is the burner 310 will be described. However, it is considered that the combustion gas of the burner 710 includes the hot air of the electric heater (not illustrated) except for the contents related to the combustion in the burner 710.

The generated combustion gas may be first supplied to the heat exchange type reformer 630 along a first combustion gas pipe cp11.

The combustion gas supplied to the heat exchange type reformer 630 is in a state of a highest temperature in the hot box 500. The combustion gas supplied to the heat exchange type reformer 630 heats the heat exchange type reformer 630. Further, the combustion gas is heat-exchanged with fuel or steam which is a heat medium for heating the stack 620 in the heat exchange type reformer 630.

By the heat exchange in the heat exchange type reformer 630, the fuel or stream is heated and the temperature of the combustion gas becomes lower. The combustion gas heat-exchanged in the heat exchange type reformer 630 may be supplied to the air preheater 640 along a second combustion gas pipe cp12.

The combustion gas supplied to the air preheater 640 is heat-exchanged with the air which is a heat medium for heating the stack 620. By the heat exchange in the air preheater 640, the air is heated and the temperature of the combustion gas becomes lower. The combustion gas heat-exchanged in the air preheater 640 may be discharged to the outside of the hot box 500 along a third combustion gas pipe cp13.

For example, the combustion gas of the burner 710 may be sequentially supplied to the heat exchange type reformer 630 and the air preheater 640. By the supply of the combustion gas, the heat exchange type reformer 630 is heated and fuel, air, or steam which is a heat medium for heating the stack is heated. The temperature of the combustion gas is gradually lowered through the heat exchange type reformer 630 and the air preheater 640.

Hereinafter, the heating of the stack 620, particularly, an anode 622 of the stack 620 will be described.

The stack 620 may be heated by the fuel or steam which is a heat medium heat-exchanged with the combustion gas. The fuel may be a variety of hydrogen or hydrocarbon based fuels, such as natural gas (NG), liquefied natural gas (LNG), liquefied petroleum gas (LPG) or diesel.

The fuel supplied into the hot box 100 may contain the steam by a separate supply device (not illustrated) and the steam included in the fuel supplied to the hot box 500 may be a water state. The fuel supplied into the hot box 100 may be supplied to the heat exchange type reformer 630 along a first fuel/stream pipe fsp11.

The fuel supplied to the heat exchange type reformer 630 is heated by heat exchange with the combustion gas of the burner in the heat exchange type reformer 630. When the steam is in the water state, the water is phase-changed to the steam by heating. The heated fuel may be supplied to the anode 622 of the stack 620 along a second fuel/stream pipe fsp12. The stack 620, particularly, the anode 622 of the stack 620 may be heated by the supply of the heated fuel.

Meanwhile, when the temperature of the high-temperature part 610 reaches a predetermined operating temperature of the system according to the present invention, the fuel supplied to the heat exchange type reformer 630 is heated by heat exchange with the combustion gas, and in addition, hydrogen gas is reformed by the heat exchange type reformer 630 and the hydrogen gas is in a high-temperature state. The hydrogen gas may be supplied to the anode 622 of the stack 620 along the second fuel/steam pipe fsp12.

The stack 620, particularly, the anode 622 of the stack 620 may maintain the operating temperature of the system according to the present invention by the supply of the hydrogen gas. Further, the hydrogen gas is also used for power generation in the stack 620.

The stack 620 is generally constituted by multiple single cells in series or in parallel and the single cell is constituted by a porous anode 622 and a cathode 624, and an electrolyte 623 having a dense structure, which is disposed therebetween.

Hydrogen H₂ contained in the hydrogen gas supplied to the anode 622 of the stack 620 reacts with oxygen ions O²⁻ conducted through the electrolyte 623 which is an ion conductor from the cathode 624. Electrons, water (H₂O), and heat are released by the reaction and the electrons are electrically operated in the process of moving to the anode through an external circuit (not illustrated). Since the reaction is an exothermic reaction that releases the heat, the stack 620, particularly, the anode 622 of the stack 620 may further easily maintain the operating temperature of the system.

The gas discharged from the anode 622 after the reaction, that is, anode discharge gas is supplied to a burner 710 along first and second anode discharge gas pipes aop11 and aop12 to be used as the fuel for combustion of the burner 710.

Meanwhile, since the reaction is an exothermic reaction that releases the heat, the anode discharge gas is discharged at a somewhat higher temperature than the hydrogen gas supplied to the anode 622.

Further, since the reaction is a reaction for discharging the water (H₂O), a large amount of steam is included in the anode discharge gas. Due to the large amount of steam, the anode discharge gas may not be suitable for being used as the fuel of the burner 710. The reason is that a temperature increment by the combustion of the burner 710 may be limited due to the steam and in particular, when the burner 710 is a catalytic burner, the steam may seriously damage a catalyst. Therefore, it is preferable to use the anode discharge gas as the fuel for the combustion of the burner 710 after removing the steam.

The steam may be removed by various methods, but it is preferable that the steam is condensed and removed by lowering the temperature of the anode discharge gas in terms of utilization of the heat by the recovery of the heat.

As described above, the component part 600 according to an exemplary embodiment of the present invention may further include an anode discharge gas cooler 670 that transfers the heat of the anode discharge gas to the air supplied to the hot box 500, in order to recover and use the heat of the anode discharge gas and lower the temperature of the anode discharge gas. When the component part 600 further includes the anode discharge gas cooler 670, the anode discharge gas may be supplied to the anode discharge gas cooler 670 along the first anode discharge gas pipe aop11.

The anode discharge gas supplied to the anode discharge gas cooler 670 is heat-exchanged with the air supplied to the hot box 500 along the first air pipe ap11 and thus the temperature may be further lowered. The further cooled anode discharge gas may pass through a heat exchanger (not illustrated) disposed outside the hot box 500 while moving to the burner 710 along the second anode discharge gas pipe aop12.

The anode discharge gas may be further cooled by the heat exchanger (not illustrated) disposed outside the hot box 500 and the heat of the anode discharge gas recovered by the heat exchanger (not illustrated) may be used for heating or hot water supply.

A condenser (not illustrated) may be disposed in the second anode discharge gas pipe aop12 passing through the outside of the hot box 500 and the water condensed by the temperature lowering may be separated and discharged from the condenser (not illustrated). Accordingly, a large amount of steam contained in the anode discharge gas may be removed and the anode discharge gas may be used more effectively as the fuel for the combustion of the burner 710.

Hereinafter, the heating of the stack 620, particularly, the cathode 624 of the stack 620 will be described.

The stack 620 may be heated by the air which is a heat medium heat-exchanged with the combustion gas. The air may be supplied to the stack 620 along the air pipes ap11, ap12, and ap13.

The component part 600 according to the exemplary embodiment of the present invention may include the air preheater 640. When the component part 600 includes the air preheater 640, the air may be supplied to the air preheater 640 along the first and second air pipes ap11 and ap12. The air supplied to the air preheater 640 may be heated by heat exchange with the combustion gas.

For more efficient heating of the air, the component part 600 according to the exemplary embodiment of the present invention may further include an anode discharge gas cooler 670 as described above. When the component part 600 further includes the anode discharge gas cooler 670, the air may be supplied to the anode discharge gas cooler 670 along the first air pipe ap11.

The air supplied to the anode discharge gas cooler 670 may be heated by heat exchange with the anode discharge gas. The air heat-exchanged with the anode discharge gas may be supplied to the air preheater 640 along the second air pipe ap12 and may be further heated by heat exchange with the combustion gas in the air preheater 640 as described above. In this case, the heating in the anode discharge gas cooler 670 may be auxiliary to the heating in the air preheater 640.

Experimentally, the temperature of the combustion gas in the air preheater 640 is measured to be higher than the temperature of the anode discharge gas in the anode discharge gas cooler 670. Accordingly, the air may preferably pass through the anode discharge gas cooler 670 and the air preheater 640 in sequence.

The air heated by the air preheater 640 or the anode discharge gas cooler 670 and the air preheater 640 may be supplied to the cathode 624 of the stack 620 along the third air pipe ap13. Accordingly, the stack 620, particularly, the cathode 624 of the stack 624 may be heated.

On the other hand, when the temperature of the high-temperature part 610 reaches a predetermined operating temperature of the system according to the present invention, the air supplied to the cathode 624 of the stack 620 is used for maintaining the operating temperature of the cathode 624 of the stack 620 and generating electric power in the stack 620.

When the air is used for generating the electric power, oxygen contained in the air supplied to the cathode 624 is reduced to oxygen ions (O²⁻) by the electrochemical reaction between the cathode 624 and the anode 622. The oxygen ions (O²⁻) are conducted to the anode 622 through the electrolyte 623 which is an ion conductor and the conducted oxygen ions (O²⁻) reacts with hydrogen (H₂) of the anode 624 to generate the electric power.

Meanwhile, the air supplied to the stack 620 to be used for heating of the cathode 624 or generating the electric power in the stack 620 is supplied to the burner 710 along a cathode discharge gas pipe cop11 to be used for the combustion of the burner.

When the heat source 700 according to the second exemplary embodiment of the present invention is the burner 710, the burner 710 receives separate combustion fuel and combustion air other than the discharge gas from the anode 622 and the cathode 624 of the stack 620, that is, the discharge gas from the stack 400 to generate the combustion gas.

The combustion fuel and the combustion air may be particularly used for ignition and combustion for combustion of the burner 710, when the temperature of the system according to the second embodiment of the present invention is increased to the operating temperature. In addition, even after the temperature of the system according to the present invention is increased to the operating temperature, the system according to the second exemplary embodiment of the present invention may generate a larger amount or a higher temperature of combustion gas by the supply of the combustion fuel and the combustion air. The temperature outside the system according to the present invention varies depending on the season, the day and the night, or the region and the temperature of the fuel, air, or water which is a heat medium supplied to the hot box 500 may vary depending on the outside temperature.

When the combustion fuel and the combustion air is supplied to the burner 710, the combustion fuel and the combustion air may be supplied to the burner 710 along a combustion fuel pipe cfp11 and a combustion air pipe cap11, respectively. The burner 710 may generate combustion gas of a larger amount or a higher temperature by supplying the combustion fuel and the combustion air.

## Claims

1. A solid oxide fuel cell system with enhanced thermal efficiency, comprising:
a hot box;
a heat exchange and a stack in the hot box; and
a heat source supplying heat to the heat exchanger,
wherein fuel and air supplied to the hot box at a room temperature is heated and operated through the heat exchanger.

2. The solid oxide fuel cell system of claim 1, wherein:
water supplied to the hot box at the room temperature is heated and operated through the heat exchanger.

3. The solid oxide fuel cell system of claim 1 or 2, wherein
the heat exchanger includes,
a heat exchange type reformer heating and reforming the fuel supplied to the hot box and supplying the heated and reformed fuel to the stack, and
an air preheater heating air supplied to the hot box and supplying the heated air to the stack, and
heat of the heat source is sequentially supplied to the heat exchange type reformer and the air preheater.

4. The solid oxide fuel cell system of claim 3, wherein:
the heat exchanger further includes an anode discharge gas cooler transferring the heat of a discharge gas discharged from an anode of the stack to the air supplied to the hot box.

5. The solid oxide fuel cell system of claim 4, wherein:
the air supplied to the hot box at the room temperature is sequentially heated through the anode discharge gas cooler and the air preheater.

6. The solid oxide fuel cell system of claim 1, wherein:
the heat source is a burner that is disposed in the hot box to generate high-temperature combustion gas.

7. The solid oxide fuel cell system of claim 6, wherein:
the burner generates the combustion gas by receiving combustion fuel and combustion air in addition to the discharge gas in the stack.

8. The solid oxide fuel cell system of claim 6, wherein:
the heat source further includes an electric heater disposed outside the hot box and supplying high-temperature air to the burner.

9. A solid oxide fuel cell system heated by high-temperature gas, comprising:
a hot box;
a component part constituted by components disposed in the hot box;
a high-temperature part constituted by components requiring a high temperature for power generation among the components;
a space part which is a space other than a space occupied by the component part of an internal space of the hot box; and
a heat source supplying high-temperature gas to the component part including the high-temperature part,
wherein the high-temperature gas heats the high-temperature part through the component part, and
a temperature rises up to an operating temperature by the heating or is maintained to the operating temperature.

10. The solid oxide fuel cell system of claim 9, wherein:
the heat source is a burner disposed in the hot box, and
the high-temperature gas is combustion gas of the burner.

11. The solid oxide fuel cell system of claim 9, wherein:
the heat source is an electric heater disposed outside the hot box, and
the high-temperature gas is high-temperature air by the electric heater.

12. The solid oxide fuel cell system of claim 9, wherein:
a heat insulating material is disposed in the space part, and
heat is insulated between the components of the component part, between the component part and the hot box, or between the components of the component part, and between the component part and the hot box by the heat insulating material.

13. The solid oxide fuel cell system of claim 12, wherein:
the heat insulating material is a heat insulating material processed to correspond to the shape of the component part or a powder type heat insulating material.

14. The solid oxide fuel cell system of claim 9, wherein:
the high-temperature part includes a heat exchange type reformer, and
the heat exchange type reformer is heated by the high-temperature gas.

15. The solid oxide fuel cell system of claim 9, wherein:
the high-temperature part includes a stack,
fuel or steam supplied to the stack is heated by heat exchange with the high-temperature gas in the component part, and
the stack is heated by the heat-exchanged fuel or steam.

16. The solid oxide fuel cell system of claim 15, wherein:
the component part includes the heat exchange type reformer,
the high-temperature gas is supplied to the heat exchange type reformer, and
the fuel or steam is heated by the heat exchange type reformer.

17. The solid oxide fuel cell system of claim 9, wherein:
the high-temperature part includes the stack,
air supplied to the stack is heated by heat exchange with the high-temperature gas in the component part, and
the stack is heated by the heat-exchanged air.

18. The solid oxide fuel cell system of claim 17, wherein:
the component part includes an air preheater.

19. The solid oxide fuel cell system of claim 18, wherein:
the component part further includes an anode discharge gas cooler of the stack, and
the air is sequentially heated through the anode discharge gas cooler and the air preheater.
